(19) Europäisches Patentamt
European Patent Office
Office européen des brevets

(11) **EP 4 361 097 A1**

(12) **EUROPEAN PATENT APPLICATION**

(43) Date of publication:
**01.05.2024 Bulletin 2024/18**

(21) Application number: **23199760.2**

(22) Date of filing: **26.09.2023**

(51) International Patent Classification (IPC):
**C01B 32/05** (2017.01)     **H01M 4/02** (2006.01)
**C01B 32/21** (2017.01)

(52) Cooperative Patent Classification (CPC):
**C01B 32/21; H01M 4/02;** C01P 2002/72;
C01P 2002/82; C01P 2004/60; C01P 2006/10;
C01P 2006/12; C01P 2006/90; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211203188**

(71) Applicant: **Ningde Amperex Technology Ltd.
Ningde City, Fujian 352100 (CN)**

(72) Inventors:
- **ZHENG, Zigui
  Ningde City, Fujian Province, People s Republic of
  China, 352100 (CN)**

- **TAN, Fujin
  Ningde City, Fujian Province, People s Republic of
  China, 352100 (CN)**
- **YI, Zheng
  Ningde City, Fujian Province, People s Republic of
  China, 352100 (CN)**
- **XIE, Yuansen
  Ningde City, Fujian Province, People s Republic of
  China, 352100 (CN)**

(74) Representative: **Icosa
  83 avenue Denfert-Rochereau
  75014 Paris (FR)**

(54) **COMPOSITE MATERIAL AND PREPARATION METHOD THEREOF, ELECTROCHEMICAL DEVICE, AND ELECTRONIC DEVICE**

(57)     This application relates to a composite material and a preparation method thereof, an electrochemical device, and an electronic device. The composite material includes a graphite particle. A surface of the graphite particle is provided with a first region and a second region. The first region is made of graphite, and the second region includes a hard carbon layer. A surface area of the first region is denoted as $A_1$ $\mu m^2$, and a surface area of the second region is denoted as $A_2$ $\mu m^2$, $0 \leq A_1/A_2 \leq 9$. A thickness of the hard carbon layer is H nm, $5 \leq H \leq 500$. By controlling the coating amount and coating area of the hard carbon to satisfy the above relationship, this application can improve energy density, capacity performance, and the like at the same time of enhancing dynamic performance.

EP 4 361 097 A1

**Description**

**TECHNICAL FIELD**

This application relates to the technical field of energy storage, and in particular, to a composite material and a preparation method thereof, an electrochemical device, and an electronic device.

**BACKGROUND**

By virtue of characteristics such as a high energy density, a high operating voltage, light weight, and the like, electrochemical devices are widely used in electronic products such as mobile phones, notebook computers, and cameras. With the electrochemical performance enhanced for the electrochemical devices, the safety performance of the electrochemical devices is not neglectable. With higher performance requirements imposed on electronic products, the requirements on the performance of the electrochemical devices are also elevated gradually.

Studies show that the migration of active ions between a positive active material and a negative active material in an electrochemical device is a core process of charging and discharging. Therefore, the negative active material exerts a significant impact on the performance such as energy density of the electrochemical device. However, existing negative active materials such as graphite incur safety problems caused by lithium plating on the surface of the graphite. In addition, an electrochemical device containing the existing negative active materials is inferior in kinetic performance, cycle life, capacity performance, and the like.

**SUMMARY**

This application provides a composite material and a preparation method thereof, an electrochemical device, and an electronic device. The composite material achieves excellent kinetic performance, cycle life, capacity performance, safety performance, and the like.

According to a first aspect, this application provides a composite material. The composite material includes a graphite particle. A surface of the graphite particle is provided with a first region and a second region. The first region is made of graphite, and the second region includes a hard carbon layer. A surface area of the first region is denoted as $A_1$ $\mu m^2$, and a surface area of the second region is denoted as $A_2$ $\mu m^2$, $0 \leq A_1/A_2 \leq 9$. A thickness of the hard carbon layer is H nm, $5 \leq H \leq 500$.

In some embodiments, $0 < A_1/A_2 \leq 4$; and/or $5 \leq H \leq 200$.

In some embodiments, an X-ray diffraction pattern of the composite material includes a hard carbon characteristic diffraction peak in a range of 18° to 30°, and a half-width of the hard carbon characteristic diffraction peak is 4° to 12°. The X-ray diffraction pattern of the composite material further includes a graphite characteristic diffraction peak in a range of 26° to 27°.

In some embodiments, a Raman spectrum of the composite material includes a characteristic peak D and a characteristic peak E. A peak intensity of the characteristic peak D is denoted as $I_D$, a peak intensity of the characteristic peak E is denoted as $I_G$, and an $I_D/I_G$ ratio satisfies $0.05 \leq I_D/I_G \leq 1.4$.

In some embodiments, the hard carbon is made of a raw material that includes a pitch material.

In some embodiments, a specific surface area BET of the composite material is denoted as S $m^2/g$, $0.5 \leq S \leq 8$.

According to a second aspect, this application provides a method for preparing a composite material. The method includes: mixing a precursor pitch material and graphite to form a mixed system; heat-treating the mixed system at a first temperature, so that the precursor pitch material is melted and coats an outer surface of the graphite to form a composite precursor; heat-treating the composite precursor at a second temperature, so that the composite precursor is oxidatively cross-linked to form a cross-linked precursor; and carbonizing the cross-linked precursor to obtain the composite material.

In some embodiments, a volume median particle size $Dv_{50}$ of the precursor pitch material is 0.5 $\mu m$ to 5.0 $\mu m$; and/or a volume median particle size $Dv_{50}$ of the graphite is 8 $\mu m$ to 14 $\mu m$.

In some embodiments, a mass percent of the precursor pitch material relative to the mixed system is denoted as $M_1$ wt%, and a mass percent of the graphite relative to the mixed system is denoted as $M_2$ wt%, $0.01 \leq M_1/M_2 \leq 1$.

In some embodiments, the method further includes: providing an organic solvent to the composite precursor to dissolve organic soluble matter in the composite precursor; and heating the precursor to remove the organic solvent.

In some embodiments, the precursor pitch material includes one or more of petroleum asphalt, mesophase pitch, or modified pitch. Further optionally, the precursor pitch material satisfies one or more of the following conditions (1) to (3): (1) a softening point of the precursor pitch material is 150 °C to 320 °C; (2) a residual carbon content of the precursor pitch material is greater than or equal to 50%; or (3) a mass percent of quinoline insoluble matter in the precursor pitch material is less than or equal to 5 wt%.

According to a third aspect, this application provides an electrochemical device. The electrochemical device includes a negative electrode plate. The negative electrode plate includes the negative electrode plate according to any one of the embodiments of the second aspect.

In some embodiments, a compacted density of the negative active material layer ranges from 1.45 $g/cm^3$ to 1.7 $g/cm^3$; and/or a porosity of the negative active material layer ranges from 15% to 25%.

According to a fourth aspect, this application provides an electronic device, including the electrochemical device according to any one of the embodiments of the third aspect of this application.

In the electrochemical device according to an embodiment of this application, hard carbon includes a large number of defect sites, and therefore, can provide many sites for storing lithium. A graphite material surface coated with a hard carbon material reduces the defect sites on the graphite surface. The composite material obtained by compounding the hard carbon with graphite achieves excellent dynamic performance, makes the lithium plating not prone to occur on the surface of the composite material, improves the safety performance, and enhances the fast-charge performance. In addition, the composite material can restrain the graphite material from expanding during lithiation, restrain the graphite sheets from exfoliating, and improve the cycle performance and capacity performance of the electrochemical device. The characteristics of the hard carbon material cause the hard carbon material to incur a relatively heavy irreversible lithium loss during the first charge-and-discharge cycle, and result in loss of energy density. Therefore, the coating amount and coating area of the hard carbon are controlled to satisfy the condition $0 \leq A_1/A_2 \leq 9$ and $5 \leq H \leq 500$, so as to improve the energy density, capacity performance, and the like at the same time of enhancing dynamic performance.

## DETAILED DESCRIPTION

Some embodiments of this application will be described in detail below. Throughout the specification of this application, the same or similar components and the components serving the same or similar functions are represented by similar reference numerals. An embodiment described herein with reference to the drawings is descriptive and illustrative in nature, and is intended to enable a basic understanding of this application. No embodiment of this application is to be construed as a limitation on this application.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In the description of specific embodiments and claims, a list of items referred to by using the terms such as "one or more of", "one or more thereof", "one or more types of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrase "at least one of A, B, or C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

## Composite material

A first aspect of this application provides a composite material. The composite material includes a graphite particle. A surface of the graphite particle is provided with a first region and a second region. The first region is made of graphite, and the second region includes a hard carbon layer. A surface area of the first region is denoted as $A_1$ $\mu m^2$, and a surface area of the second region is denoted as $A_2$ $\mu m^2$, $0 \leq A_1/A_2 \leq 9$. A thickness of the hard carbon layer is H nm, $5 \leq H \leq 500$. The applicant speculates that the working mechanism of this application is as follows:

The theoretical specific capacity of graphite is 372 mAh/g. A lithium-ion battery made of graphite is characterized by a high and steady working voltage, high first-cycle Coulombic efficiency, high cycle performance, and the like. Graphite includes artificial graphite and/or natural graphite. Graphite is rather imperfect. For example, the 002 interplanar spacing of graphite is relatively small, and the content of graphite surface defects is relatively low. In a case of charging at a high rate and under low-temperature conditions, dynamic conditions for diffusing active ions such as lithium ions inside the graphite are inferior, and lithium plating is prone to occur on the surface of graphite particles to pierce a separator and cause safety problems. In addition, in a long cycling process, on the one hand, graphite may expand to change the thickness and stress of the electrochemical device. On the other hand, repeated deintercalation of lithium ions between the graphite sheets may cause the graphite sheets to exfoliate, result in capacity loss and material failure, and lead to inferior cycle performance of the electrochemical device.

Hard carbon is a carbon material of a graphite crystallite structure in which the crystallites are arranged irregularly. The crystallites are cross-linked to each other rather strongly. The 002 interplanar spacing of hard carbon is greater than 0.37 nm. The crystallites inside the hard carbon are of a disordered structure in which a large number of defect sites exist, and can provide many sites for storing lithium. A graphite material surface coated with a hard carbon material reduces the defect sites on the graphite surface. The composite material obtained by compounding the hard carbon with graphite achieves excellent dynamic performance, makes the lithium plating not prone to occur on the surface of the composite material, improves the safety performance, and enhances the fast-charge performance. In addition, the composite material can restrain the graphite material from expanding during lithiation, restrain the graphite sheets from exfoliating, and improve the cycle performance and capacity performance of the electrochemical device.

The thickness of a coating layer containing hard carbon may be measured by transmission electron microscopy (Transmission electron microscopy, TEM).

The characteristics of the hard carbon material cause the hard carbon material to incur a relatively heavy irreversible lithium loss during the first charge-and-discharge cycle, and result in loss of energy density. Therefore, the coating amount and coating area of the hard carbon need to be controlled to satisfy the condition $0 \leq A_1/A_2 \leq 9$ and $5 \leq H \leq 500$, so as to improve the energy density, capacity performance, and the like at the same time of enhancing dynamic performance. Optionally, $0 < A_1/A_2 \leq 4$, $5 \leq H \leq 200$. As an example, the $A_1/A_2$ ratio may be 0, 1, 2, 3, 4, 5, 6, 7, 8, 9, or a value falling within a range formed by any two thereof. The thickness of the coating layer may be 5 nm, 10 nm, 20 nm, 50 nm, 80 nm, 100 nm, 150 nm, 200 nm, 250 nm, 300 nm, 350 nm, 400 nm, 450 nm, 500 nm, or a value falling within a range formed by any two thereof. In some embodiments, an X-ray diffraction pattern of the composite material includes a hard carbon characteristic diffraction peak in a range of 18° to 30°, and a half-width of the hard carbon characteristic diffraction peak is 4° to 12°. The X-ray diffraction pattern of the composite material includes a graphite characteristic diffraction peak in a range of 26° to 27°.

In some embodiments, a Raman spectrum of the composite material includes a characteristic peak D and a characteristic peak E. A peak intensity of the characteristic peak D is denoted as $I_D$, a peak intensity of the characteristic peak E is denoted as $I_G$, and an $I_D/I_G$ ratio satisfies $0.05 \leq I_D/I_G \leq 1.4$. The composite material includes both hard carbon and graphite. Therefore, the Raman spectrum of the composite material includes both a characteristic peak of the hard carbon and a characteristic peak of the graphite. The measured $I_D/I_G$ ratio is non-fixed value that falls within a value range.

The hard carbon that coats the graphite surface may coat a part of the surface of the graphite, or may coat the entire surface of the graphite. For ease of understanding here, the surface of the graphite is divided into two regions: a first region and a second region. The graphite surface region coated with hard carbon is considered as the second region, and the graphite surface region that is not coated with hard carbon is considered as the first region. The surface areas of the first region and the second region may be measured through a Raman test. Using the composite material as a specimen, an $I_D/I_G$ ratio value obtained in the Raman test is variably distributed in the range of 0.05 to 1.4. When a test point is located in the first region, the measured $I_D/I_G$ ratio value in the test is a characteristic of graphite. When the test point is located in the second region, the measured $I_D/I_G$ ratio value in the test is a characteristic of hard carbon. The probability of the two characteristics being measured under the Raman test depends on a ratio of an area not covered by the hard carbon to an area covered by the hard carbon on the surface of the graphite. Therefore, this application can determine an $A_1/A_2$ ratio of a surface area between the first region and the second region through the Raman test. $A_1/A_2 = 0$ means that the hard carbon coats the entire graphite surface. That is, no part of the graphite surface is not coated with the hard carbon. $A_1/A_2 > 0$ means that the hard carbon coats a part of the graphite surface. That is, a part of the graphite surface is not coated with the hard carbon.

In some embodiments, the hard carbon material may be obtained through hydrothermal or chemical treatment on a carbon-containing precursor material. The precursor material includes one or more of a precursor resin material, a precursor pitch material, and a precursor biomass material. The precursor material in this application is optionally a precursor pitch material. The pitch-based hard carbon prepared from the precursor pitch material is of a richer microporous structure and includes micropores distributed uniformly, thereby providing more sites for storing lithium, and increasing the capacity of the composite material.

The applicant hereof finds that, when the composite material further satisfies one or more of the following conditions, the performance of the composite material is further improved.

In some embodiments, a specific surface area BET of the composite material is denoted as S m²/g, $0.5 \leq S \leq 8$.

When the specific surface area of the composite material falls within the above range, the specific surface area of the composite material will not be excessive, and the SEI film of a moderate thickness can be formed during the first charge-and-discharge cycle of the electrochemical device, thereby making the electrochemical device not prone to capacity loss. In addition, the specific surface area of the composite material will not be deficient, the particle size of the composite material will not be excessive, and a diffusion path of lithium ions inside the composite material is relatively short, thereby enhancing the fast charge and fast discharge capabilities of the electrochemical device. Optionally, $0.5 \leq S \leq 6$. As an example, the specific surface area BET of the composite material may be 0.5 m²/g, 1 m²/g, 2 m²/g, 3 m²/g, 4 m²/g, 5 m²/g, 6 m²/g, 7 m²/g, 8 m²/g, or a value falling within a range formed by any two thereof.

**Method for preparing the composite material**

A second aspect of this application further provides a method for preparing a composite material. The method may be used to prepare the composite material according to the first aspect of this application.

The method includes:

Step S100: Mixing a precursor pitch material and graphite to form a mixed system;
Step S200: Heat-treating the mixed system at a first temperature, so that the precursor pitch material is melted and coats an outer surface of the graphite to form a composite precursor;
Step S300: Heat-treating the composite precursor at a second temperature, so that the composite precursor is oxidatively cross-linked to form a cross-linked precursor; and
Step S400: Carbonizing the cross-linked precursor to obtain the composite material.

The preparation process according to this application is simple and efficient, and can form a composite material with excellent performance.

In some embodiments, in step S100, a mass percent of the precursor pitch material relative to the mixed system is denoted as $M_1$ wt%, and a mass percent of the graphite relative to the mixed system is denoted as $M_2$ wt%, $0.01 \leq M_1/M_2 \leq 1$.

When the mass ratio between the precursor pitch material such as pitch and graphite falls within the above range, the mass percent of the pitch will not be excessive. In the subsequent melting process, pitch particles are not prone to stick to each other, and the steps of pulverization and sieving are made omissible, thereby reducing the risk of exposure of the coating interface and impairment of the coating effect by the steps of pulverization and sieving, and ensuring a good coating effect of the pitch. As an example, the mass ratio between the precursor pitch material and the graphite may be 0.01, 0.02, 0.05, 0.8, 0.1, 0.2, 0.5, 0.6, 0.8, 1, or a value falling within a range formed by any two thereof.

In some embodiments, in step S100, a volume median particle size $Dv_{50}$ of the precursor pitch material is 0.5 $\mu$m to 5.0 $\mu$m; and/or a volume median particle size $Dv_{50}$ of the graphite is 8 $\mu$m to 14 $\mu$m. $D_{v50}$ is defined as a particle size of the material measured when the cumulative volume percent of the material reaches 50% in a volume-based particle size distribution, and may be measured by a method known in the art. For example, the volume median particle size may be determined by using a laser particle size analyzer (such as Malvern Mastersizer 3000) with reference to the standard GB/T 19077.1-2016. As an example, the volume median particle size of the precursor pitch material may be 0.5 $\mu$m, 0.8 $\mu$m, 1.0 $\mu$m, 1.5 $\mu$m, 2.0 $\mu$m, 2.5 $\mu$m, 3.0 $\mu$m, 3.5 $\mu$m, 4.0 $\mu$m, 5.0 $\mu$m, or a value falling within a range formed by any two thereof. The volume median particle size of graphite may be 8 $\mu$m, 9 $\mu$m, 10 $\mu$m, 11 $\mu$m, 12 $\mu$m, 13 $\mu$m, 14 $\mu$m, or a value falling within a range formed by any two thereof.

When the volume median particle size of the precursor pitch material falls within the above range, the particles of the precursor pitch material are not prone to stick each other during the melting and can uniformly coat the surface of the graphite particles, thereby improving the coating effect.

In some embodiments, the graphite in step S100 may be selected from artificial graphite or natural graphite. With the outer surface of the graphite being coated with the precursor pitch material such as pitch, the surface defects of the graphite can be reduced.

In some embodiments, the precursor pitch material in step S100 includes one or more of a precursor resin material, a precursor pitch material, or a precursor biomass material. As an example, the precursor resin material includes one or more of phenolic resin, epoxy resin, or polyfurfuryl alcohol. The precursor pitch material includes one or more of petroleum asphalt, mesophase pitch, or modified pitch. The mesophase pitch may be obtained by heat-treating coal tar pitch, petroleum asphalt, or the like. The modified pitch may be a product obtained by doping the pitch with rubber, resin, high-molecular polymer, a filler, or the like and modifying the pitch, or by oxidatively modifying the pitch. All the precursor pitch materials mentioned in this application may be selected from commercially available products. The precursor biomass material includes one or more of cellulose, lignin, starch, chitosan, sucrose, or glucose. The pitch-based hard carbon prepared from the precursor pitch material according to this application is of a richer microporous structure and includes micropores distributed uniformly, thereby providing more sites for storing lithium, and increasing the capacity of the composite material.

In some embodiments, the mixed system is heat-treated in step S200 in order to melt the precursor pitch material and coat the graphite surface with the melted precursor pitch material. In this step, the heating temperature is the first temperature, and the first temperature is greater than or equal to the melting point or softening point of the precursor pitch material. For example, the precursor pitch material is pitch, and the softening point of the pitch is 150 °C to 320 °C. The first temperature is greater than or equal to the softening point of the pitch. Specifically, after the mixed system is heated at 150 °C to 320 °C and the temperature is maintained for 0.5 h to 4 h, the pitch is melted to coat the outer surface of the graphite.

Due to a low capacity of the hard carbon formed by carbonizing the pitch, the capacity of the composite material formed of the graphite coated with the hard carbon is relatively low. In order to further increase the capacity of the composite material, a microporous structure is formed inside the hard carbon during a process of forming the hard carbon to increase the lithium storage capacity. In some embodiments, the method further includes: step S500: providing an organic solvent to a composite precursor to dissolve organic soluble matter in the precursor; and step S600: heating the precursor to remove the organic solvent.

Micromolecular organic soluble matter such as quinoline insoluble matter is included inside the pitch. The organic solvent can dissolve out a small amount of micromolecular organic soluble matter, thereby facilitating the formation of a microporous structure inside the carbonized pitch, and in turn, providing more lithium-ion active sites to increase the capacity of the hard carbon. A too high content of the micromolecular organic soluble matter contained in the pitch needs to be avoided because, if the organic solvent dissolves out the constituent in a too large amount, the pores formed in the hard carbon material will be too large to store lithium. Therefore, the mass percent of the quinoline insoluble matter in the pitch is set to be less than or equal to 5 wt%. The mass percent of the quinoline insoluble matter is calculated based on the total mass of pitch.

For the pitch with a high residual carbon content, a large number of high-molecular-weight aromatic compounds are included in the surface of the pitch. In a pyrolysis process, the volume of the precursor pitch material little changes and the micropores generated in the preliminary treatment are retained. Therefore, the residual carbon content of the pitch needs to be greater than or equal to 50%. The precursor pitch material needs to be thermally oxidized in step S300, so as to be oxidatively cross-linked to fix the pore structure inside the precursor pitch material. Therefore, the softening point of the selected pitch needs to be lower than the temperature required for the oxidative cross-linking reaction. For example, the softening point of the pitch is 150 °C to 320 °C.

To reduce the adverse effect caused by the organic solvent onto the composite material, after the organic solvent dissolves the micromolecular organic soluble matter in the pitch, the system is heated to volatilize away the organic solvent. The heating temperature in step S600 may be greater than or equal to a boiling point of the organic solvent. For example, the organic solvent may be one or more selected from halogenated hydrocarbons, alcohols, aromatic hydrocarbons, alicyclic hydrocarbons, or ketones.

Specifically, the composite precursor may be mixed with the organic solvent at a concentration of 10 g/L to 200 g/L and stirred for 1 hour to 48 hours, and then the mixture is suction-filtered. Subsequently, the solid constituents in the mixture are placed into a 60 °C to 80 °C oven to stand for 12 to 48 hours.

In some embodiments, the composite precursor is reheated in step S300 to oxidatively cross-link the composite precursor, and especially oxidatively cross-link the particles inside the precursor pitch material in the composite precursor, so as to form a three-dimensional cross-linked network structure in the precursor pitch material to fix the internal structure of the precursor pitch material. This step is performed together with steps step S500 and step S600 to form a pore structure of a three-dimensional cross-link network in the precursor pitch material. After carbonization, a hard carbon structure that includes a large number of microporous structures can be obtained, thereby making it convenient to store lithium ions, increasing the capacity of the hard carbon material, and in turn, increasing the overall capacity of the composite material.

The second temperature in step S300 needs to be lower than the melting point or softening point of the precursor pitch material. For example, the precursor pitch material is pitch, with a softening point of 150 °C to 320 °C. The second temperature is lower than the softening point.

Specifically, the composite precursor is placed in an oxidizing atmosphere, and is heat-treated for 0.5 hour to 48 hours at a temperature lower than the softening point of the pitch, such as 140 °C to 300 °C, so that the particles inside the precursor pitch material are thoroughly oxidized and cross-linked.

In some embodiments, the cross-linked precursor is carbonized in step S400 at a relatively high temperature. A hard carbon material is formed after the carbonization and sintering. The hard carbon material forms a coating layer to cover the outer surface of the graphite. The cross-linked precursor is heated to 400 °C to 700 °C in an inert atmosphere, and the temperature is kept for 0.5 hour to 4 hours. Subsequently, the temperature is increased to 900 °C to 1400 °C and kept for 0.5 hour to 4 hours to obtain a composite material.

In a specific embodiment of this application, the steps of preparing the composite material include:

(1) Pulverizing and sieving the pitch, controlling $Dv_{50}$ of particles of the pitch to fall within a range of 1 μm to 4 μm, mixing well the sieved pitch with the graphite that possesses $Dv_{50}$ of 8 μm to 14 μm, so that the small-sized pitch particles are electrostatically adsorbed onto the large-grained graphite surface after the mixing. Heat-treating the mixture so that the pitch particles are melted to coat the surface of graphite particles, thereby making a composite precursor A formed of pitch-coated graphite, in which a mass ratio between pitch and graphite is 0.01 to 2.

(2) Putting the precursor A in step (1) in an inert atmosphere, heating the precursor to a temperature of 150 °C to 320 °C, and keeping the temperature for 0.5 hour to 4 hours to obtain a precursor B, with the temperature in this step being higher than the melting point of pitch;

(3) Mixing the precursor B in step (2) with an organic solvent, with a concentration of the precursor B being 10 g/L to 200 g/L; stirring the mixture for 1 hour to 48 hours, and then suction-filtering the mixture; subsequently, placing solid constituents in the mixture into a 60 °C to 80 °C oven to stand for 12 to 48 hours to obtain a precursor C, where the organic solvent is one or more of halogenated hydrocarbons, alcohols, aromatic hydrocarbons, alicyclic hydrocarbons, or ketones;

(4) Putting the precursor C in step (3) in an oxidizing atmosphere, heat-treating the precursor at a temperature of 150 °C to 350 °C for 0.5 hour to 48 hours to obtain a precursor D, with the temperature in this step being lower than the melting point of pitch; and

(5) Heating the precursor D in step (4) to 400 °C to 700 °C in an inert atmosphere, and keeping the temperature for 0.5 hour to 4 hours; subsequently, increasing the temperature to 900 °C to 1400 °C, and keeping the temperature for 0.5 hour to 4 hours to obtain a composite material formed of graphite coated with a pitch-based hard carbon layer.

**Negative electrode plate**

A third aspect of this application provides a negative electrode plate. The negative electrode plate includes a negative current collector and a negative active material layer disposed on at least one surface of the negative current collector. The negative active material layer includes the composite material according to any one of the embodiments in the first aspect of this application or a composite material prepared by the method according to any one of the embodiments in the second aspect of this application.

In some embodiments, a compacted density of the negative active material layer ranges from 1.45 g/cm$^3$ to 1.7 g/cm$^3$. The coating layer of the composite material includes a hard carbon material. A large number of pore structures are formed in a process of preparing the hard carbon material, resulting in a low density of the composite material as a whole. After the graphite surface is coated with the composite material, the compacted density of the negative active material layer is relatively low with the increase of the coating amount.

In some embodiments, a porosity of the negative active material layer ranges from 15% to 25%. When a cross-sectional porosity of the negative active material layer falls within the above range, the electrolytic solution can thoroughly infiltrate the particles of the negative active material and enhance the kinetic performance. In addition, the number of contact points between the particles of the negative active material is caused to be relatively large, the internal resistance of the electrochemical device is caused to be relatively low, thereby ensuring a high energy density of the electrochemical device.

In some embodiments, a structure of the negative electrode plate is a negative electrode plate structure applicable to an electrochemical device as well known in the art.

In some embodiments, the negative current collector is metal, including but not limited to: a copper foil, a nickel foil, a stainless steel foil, a titanium foil, foamed nickel, foamed copper, or a polymer substrate clad with a conductive metal, or a combination thereof.

The negative active material may be the composite material according to any one of the embodiments in the first aspect of this application or a composite material prepared by the method according to any one of the embodiments in the second aspect of this application, and may be a conventional substance which, as well known in the art, can be used as a negative active material of an electrochemical device to enable reversible intercalation and deintercalation of active ions or enable reversible doping and de-doping of active ions.

In some embodiments, the negative active material includes at least one of a lithium metal, a lithium metal alloy, a carbon material, a material that can be doped or de-doped with lithium, or a transition metal oxide. In some embodiments, the carbon material may be one of various carbon materials suitable for use as a carbon-based negative active material of an electrochemical device as well known in the art. In some embodiments, the carbon material includes at least one of crystalline carbon or non-crystalline carbon. In some embodiments, the crystalline carbon is natural graphite or artificial graphite. In some embodiments, the crystalline carbon may be amorphous, plate-shaped, mini-sheet-shaped, spherical or fiber-shaped. In some embodiments, the crystalline carbon is low-crystallinity carbon or high-crystallinity carbon. In some embodiments, the low-crystallinity carbon includes at least one of soft carbon or hard carbon. In some embodiments, the high-crystallinity carbon includes at least one of natural graphite, crystalline graphite, pyrolytic carbon, mesophase pitch-based carbon fibers, mesophase carbon microbeads, mesophase pitch, or high-temperature calcined carbon.

In some embodiments, the high-temperature calcined carbon is petroleum, or is coke derived from coal tar pitch. In some embodiments, the non-crystalline carbon includes at least one of soft carbon, hard carbon, a mesophase pitch carbonization product, or fired coke. In some embodiments, the negative active material includes a transition metal oxide. In some embodiments, the transition metal oxide includes at least one of vanadium oxide or lithium vanadium oxide. In some embodiments, the negative active material includes at least one of Si, SiO$_x$ (0 < x < 2), a Si/C composite, a Si-Q alloy, Sn, SnO$_z$, a Sn-C composite, or a Sn-R alloy, where Q is at least one selected from an alkali metal, an alkaline earth metal, group-13 to group-16 elements, transition elements, and rare earth elements, and Q is an element other than Si. R is at least one selected from an alkali metal, an alkaline earth metal, group-13 to group-16 elements, transition elements, and rare earth elements, and R is an element other than Sn. In some embodiments, Q and R each include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po.

In some embodiments, the negative active material layer further includes a negative binder and a negative conductive agent. In some embodiments, the negative binder includes at least one of poly(vinylidene difluoride-co-hexafluoropropylene) (PVDF-co-HFP), polyvinylidene difluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, an ethyleneoxide-containing polymer, polyvinylpyrrolidone, polyurethane, polytetrafluoroethylene, polyethylene, polypropylene, styrene-butadiene rubber, acrylic (acrylate) styrene-butadiene rubber, epoxy resin, or nylon. In some embodiments, the negative conductive agent serves to make the electrode conductive, and may include any conductive material so long as the material does not cause a chemical change. In some embodiments, the negative conductive agent includes any one of a carbon-based material, a metal-based material, or a conductive polymer, or a mixture thereof. In some embodiments, the carbon-based material includes at least one of natural graphite, artificial graphite, carbon black, acetylene black, Ketjen black, or carbon fibers. In some embodiments, the metal-based material includes at least one of metal powder or metal fibers containing copper, nickel, aluminum, silver, or the like. In some embodiments, the conductive polymer includes a polyphenylene derivative.

In some embodiments, a method for preparing the negative electrode plate is a preparation method of a negative electrode applicable to an electrochemical device as well known in the art. In some embodiments, in preparing a negative slurry, a solvent, a negative active material and a binder are usually added, a conductive material and a thickener are added as needed, then dissolved or dispersed in the solvent to form a negative slurry. The solvent is removed by volatilizing during drying. The solvent is a solvent suitable for use in a negative active material layer as well known in the art. The solvent may be, but without being limited to, water. The thickener is a thickener suitable for use in a negative active material layer as well known in the art. The thickener may be, but without being limited to, sodium carboxymethyl cellulose.

The mixing ratio of the negative active material, the binder, and the thickener in the negative active material layer is not particularly limited in this application, and the mixing ratio may be controlled in view of the desired performance of the electrochemical device.

## Electrochemical device

A fourth aspect of this application further provides an electrochemical device. The electrochemical device includes a negative electrode plate. The negative electrode plate may be the negative electrode plate according to any one of the embodiments in the third aspect of this application.

In some embodiments, the electrochemical device according to this application includes, but is not limited to: primary battery, secondary battery, fuel battery, solar battery, or capacitor.

In some embodiments, the electrochemical device is a lithium secondary battery.

In some embodiments, the lithium secondary battery includes, but is not limited to, a lithium metal secondary battery, a lithium-ion secondary battery, a lithium polymer secondary battery, or a lithium-ion polymer secondary battery.

## [Positive electrode plate]

The electrochemical device according to an embodiment of this application may further include a positive electrode plate. The positive electrode plate is a positive electrode plate well known in the art as applicable to an electrochemical device. In some embodiments, the positive electrode plate includes a positive current collector and a positive active material layer. The positive active material layer is disposed on a surface of the positive current collector. The positive active material layer includes a positive active material.

In some embodiments, a structure of the negative electrode plate is a negative electrode plate structure applicable to an electrochemical device as well known in the art.

In some embodiments, the positive current collector is a metal. The metal may be, but without being limited to, an aluminum foil.

The positive active material may be one of various positive active materials applicable to an electrochemical device as well known in the art, and may be a conventional well-known material that enables reversible intercalation and deintercalation of active ions. In a case of a lithium-ion battery, lithium ions are usually contained in the positive active material. In a case of a sodium-ion battery, sodium ions are usually contained in the positive active material. The following description uses a lithium-ion battery as an example.

In some embodiments, the positive active material includes a positive electrode material capable of absorbing and releasing lithium, including but not limited to, lithium cobalt oxide, lithium nickel cobalt manganese oxide, lithium nickel cobalt aluminum oxide, lithium manganese oxide, lithium iron manganese phosphate, lithium vanadium phosphate, lithium vanadyl phosphate, lithium iron phosphate, lithium titanium oxide, and a lithium-rich manganese-based material.

In some embodiments, the positive active material layer further includes a positive binder and a positive conductive agent. The positive binder is configured to improve the binding performance between different positive active material particles, and between a positive active material particle and the current collector. In some embodiments, the positive binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene difluoride, polyethylene, polypropylene, styrene-butadiene rubber, acrylic (acrylate) styrene-butadiene rubber, epoxy resin, or nylon. The positive conductive agent serves to make the electrode conductive, and may include any conductive material so long as the material does not cause a chemical change. In some embodiments, the positive conductive agent includes at least one of natural graphite, artificial graphite, carbon black, acetylene black, Ketjen black, carbon fibers, metal powder, metal fibers, or a polyphenylene derivative. In some embodiments, the metal in the metal powder and the metal fibers includes at least one of copper, nickel, aluminum, or silver.

In some embodiments, a method for preparing the positive electrode plate is a preparation method of a positive electrode plate well known in the art as applicable to an electrochemical device. In some embodiments, in preparing a positive slurry, a solvent, a positive active material and a binder are usually added, a conductive material and a thickener are added as needed, then dissolved or dispersed in the solvent to form a positive slurry. The solvent is removed by volatilizing during drying. The solvent is a solvent suitable for use in a positive active material layer as well known in the art. The solvent may be, but without being limited to, N-methyl-pyrrolidone (NMP).

**[Separator]**

The electrochemical device according to an embodiment of this application may further include a separator to prevent a short circuit. The material and the shape of the separator applicable to an embodiment of this application are not particularly limited, and may be based on any technology disclosed in the prior art.

In some embodiments, the separator includes a polymer or an inorganic compound or the like formed from a material that is stable to the electrolytic solution disclosed in this application.

In some embodiments, the separator includes at least one of polyethylene, polypropylene, polyethylene terephthalate, polyimide, or aramid fibers. For example, the polyethylene includes constituents that are at least one of high-density polyethylene, low-density polyethylene, or ultra-high-molecular-weight polyethylene. Especially, the polyethylene and the polypropylene are highly effective in preventing short circuits, and improve stability of the battery through a turn-off effect.

A porous layer may be further disposed on a surface of the separator. The porous layer is disposed on at least one surface of the separator. The porous layer includes inorganic particles and a binder. The inorganic particles are selected from one of or any combination of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. The binder is one of or any combination of polyvinylidene fluoride, poly(vinylidene fluoride-co-hexafluoropropylene), polyamide, polyacrylonitrile, polyacrylate, polyacrylic acid, polyacrylate, sodium carboxymethyl cellulose, polyvinylpyrrolidone, polyvinyl ether, poly methyl methacrylate, polytetrafluoroethylene, and polyhexafluoropropylene.

The porous layer on the surface of the separator can improve heat resistance, oxidation resistance, and electrolyte infiltration performance of the separator, and enhance adhesion between the separator and the electrode plate.

The method for preparing the separator is a preparation method of a separator well known in the art as applicable to an electrochemical device.

**[Electrolytic solution]**

The electrochemical device according to an embodiment of this application may further include an electrolytic solution. The electrolytic solution according to this application includes an electrolyte salt. The electrolyte salt is an electrolyte salt applicable to an electrochemical device as well known in the art. For each different electrochemical device, an appropriate electrolyte salt may be selected. For example, in a case of a lithium-ion battery, the electrolyte salt is usually a lithium salt. For another example, in a case of a sodium-ion battery, the electrolyte salt is usually a sodium salt. The following description uses a lithium-ion battery as an example.

In some embodiments, the lithium salt includes at least one selected from an organic lithium salt and an inorganic lithium salt.

In some embodiments, the electrolytic solution further includes a lithium salt. The lithium salt includes lithium bis(fluorosulfonyl)imide and lithium hexafluorophosphate. The concentration of the lithium salt is 1 mol/L to 2 mol/L, and a molar ratio between the lithium bis(fluorosulfonyl)imide and the lithium hexafluorophosphate is 0.05 to 4.

In some embodiments, the electrolytic solution may further include a nonaqueous solvent. The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

The nonaqueous organic solvent in the electrolytic solution may be a single type of nonaqueous organic solvent or a mixture of different nonaqueous organic solvents. When the nonaqueous organic solvent is a mixed solvent, the mixing ratio may be controlled in view of the desired performance of the electrochemical device.

The electrolytic solution according to this application may further contain a functional additive such as a film-forming additive and a positive electrode film-forming additive. The film-forming additive serves to form a solid electrolyte interphase film on the surface of the negative electrode plate and/or the positive electrode plate to protect the negative electrode plate and/or the positive electrode plate. In some embodiments, the film-forming additive may be a polynitrile additive, a sulfonate additive, or the like.

Based on the same inventive concept, this application further provides an electronic device.

The electronic device in this embodiment may be any electronic device, and may be, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, or lithium-ion capacitor. It is hereby noted that the electrochemical device according to this application is not only applicable to the electronic devices enumerated above, but also applicable to energy storage stations, marine transport vehicles, and air transport vehicles. The air transport vehicles include air transport vehicles in the atmosphere and space transport vehicles outside the atmosphere.

In some embodiments, the electronic device includes the electrochemical device described herein above.

The following uses a lithium-ion battery as an example to further describe the technical solution of this application with reference to comparative embodiments and embodiments, but this application is not limited to such embodiments. A person skilled in the art understands that the preparation method described herein is merely exemplary. Any modification or equivalent replacement made to the technical solutions of this application without departing from the scope of the technical solutions of this application shall fall within the protection scope of this application.

Unless otherwise expressly specified, reagents, materials, and instruments used in the following embodiments and comparative embodiments are all commercially available or obtained by synthesis.

**Embodiments vs. Comparative Embodiments**

**Embodiment 1 Preparing a lithium-ion battery**

1. Preparing a positive electrode plate:

Mix lithium cobalt oxide as a positive active material, conductive carbon black (Super P), and polyvinylidene difluoride (PVDF) at a mass ratio of 97: 1.4: 1.6, add N-methyl pyrrolidone (NMP) as a solvent, and stir well to form a positive slurry. Coat a positive current collector aluminum foil with the positive slurry (with a solid content of 72 wt%) evenly for a coating thickness of 80 $\mu$m. Dry the aluminum foil at 85 °C, and then perform cold pressing, cutting, and slitting. Dry the aluminum foil under an 85 °C vacuum condition for 4 hours to obtain a positive electrode plate.

2. Preparing a negative electrode plate

2.1 Preparing a negative active material

Put 1 gram of pitch particles and 99 grams of artificial graphite into a V-shaped mixer, where the $Dv_{50}$ of the pitch particles is 2 $\mu$m and the $Dv_{50}$ of the artificial graphite is 11 $\mu$m. Stir the mixture for 2 hours to obtain a precursor A, in which the softening point of the pitch is 260 °C, the residual carbon content is 75%, and the content of the quinoline insoluble matter is less than or equal to 0.5%.

Put the precursor A prepared in the preceding step into an oven. Increase the temperature to 280 °C in a nitrogen atmosphere, and keep the temperature for 3 hours to obtain a pitch-coated graphite precursor B.

Mix 50 grams of precursor B powder and 500 ml of toluene, stir the mixture for 24 hours, and then suction-filter the mixture. Collect the solid powder in the mixture, and store the powder in a 70 °C oven for 24 hours to obtain a precursor C.

Put the precursor C into the oven. Increase the temperature to 220 °C in a compressed air, and keep the temperature for 24 hours to obtain a precursor D.

Heat the precursor D to 600 °C in an argon atmosphere, and keep the temperature for 2 hours. Subsequently, increase the temperature to 1100 °C, and keep the temperature for 2 hours to obtain a composite material formed of graphite coated with a hard carbon layer. Use the composite material as a negative active material.

2.2 Preparing a negative electrode plate

Dissolve the negative active material prepared in step 2.1, styrene-butadiene rubber as a binder, and sodium carboxymethyl cellulose (CMC) at a mass ratio of 97: 1.5: 1.5 in deionized water to form a negative slurry (with a solid content of 40 wt%). Use a 6 $\mu$m-thick copper foil as a negative current collector. Coat the negative current collector with the negative slurry for a thickness of 50 $\mu$m on a single side. Dry the slurry at 85 °C, and then perform cold pressing, cutting, and slitting. Dry the current collector under a 120 °C vacuum condition for 12 hours to obtain a negative electrode plate.

3. Preparing a separator

Use a 7 $\mu$m-thick polyethylene (PE) film as a separator.

4. Preparing an electrolytic solution

Mix ethylene carbonate (EC), propylene carbonate (PC), and diethyl carbonate (DEC) in a dry argon atmosphere glovebox at a mass ratio of EC: PC: DEC = 1: 1: 1, and then add 2 wt% 1,3-propane sultone, 2 wt% fluoroethylene carbonate, and 2 wt% succinonitrile. Dissolve and thoroughly stir such constituents, and then add a lithium salt $LiPF_6$. Stir well to obtain an electrolytic solution, in which the concentration of $LiPF_6$ is 1 mol/L.

5. Preparing a lithium-ion battery

Stack the positive electrode plate, separator, and negative electrode plate sequentially in such a way that the separator is located between the positive electrode plate and the negative electrode plate to serve a function of separation, and wind the stacked structure to obtain an electrode assembly. Put the electrode assembly in an aluminum plastic film that serves as an outer package, dehydrate the electrode assembly under 80 °C, inject the electrolytic solution, and perform packaging. Perform steps such as chemical formation, degassing, and edge trimming to obtain a lithium-ion battery.

**Embodiments 2 to 25**

The lithium-ion battery in Embodiments 2 to 25 is prepared in almost the same way as that in Embodiment 1. The difference from Embodiment 1 is that, during the preparation of the negative active material in Embodiments 2 to 25, the mass percent of graphite, the mass percent of the pitch, the $Dv_{50}$ of the graphite particles, and the $Dv_{50}$ of the pitch particles are changed to obtain the corresponding composite materials and obtain the corresponding lithium-ion batteries.

**Comparative Embodiment 1**

The lithium-ion battery in Comparative Embodiment 1 is prepared in almost the same way as that in Embodiment 1. The difference from Embodiment 1 is that the negative active material in Comparative Embodiment 1 is artificial graphite.

**Comparative Embodiment 2**

The lithium-ion battery in Comparative Embodiment 2 is prepared in almost the same way as that in Embodiment 1. The difference from Embodiment 1 is that the negative active material in Comparative Embodiment 2 is hard carbon.
A method for preparing the hard carbon is as follows: Put pitch particles with a $Dv_{50}$ of 15 $\mu$m in a nitrogen atmosphere, increase the temperature to 280 °C, and keep the temperature for 3 hours to obtain a pitch precursor A, in which the softening point of the pitch is 260 °C, the residual carbon content is 75%, and the content of the quinoline insoluble matter is less than or equal to 0.5%. Mix 50 grams of powder of the precursor A with 500 ml of toluene, stir for 24 hours, and then suction-filter the mixture. Collect the solid powder, and store the powder in a 70 °C oven for 24 hours to obtain a precursor B. Put the precursor B in the oven, and increase the temperature to 220 °C in a compressed air, and keep the temperature for 24 hours to obtain a precursor C. Heat the precursor C to 600 °C in an argon atmosphere and keep the temperature for 2 hours, and then increase the temperature to 1100 °C and keep the temperature for 2 hours to obtain the hard carbon.

**Comparative Embodiments 3 and 4**

The lithium-ion battery in Comparative Embodiments 3 and 4 is prepared in almost the same way as that in Embodiment 1. The difference from Embodiment 1 is that, during the preparation of the negative active material in Comparative Embodiments 3 and 4, at least one of the mass percent of graphite, the mass percent of the pitch, the $Dv_{50}$ of the graphite particles, or the $Dv_{50}$ of the pitch particles is changed.

**Test Part**

I. Testing relevant parameters of the negative active material

Disassemble a fully discharged lithium-ion battery, take out a negative electrode plate, soak the negative electrode plate in dimethyl carbonate (DMC) for 20 minutes, and then rinse the negative electrode plate with the DMC and acetone sequentially to remove the electrolytic solution and superficial SEI film. Subsequently, put the negative electrode plate in an oven and bake it at 80 °C for 12 hours to obtain a treated negative electrode plate. Scrape off the powder from the negative electrode plate with a scraper, and heat-treat the scraped powder in a tube furnace at 400 °C for 4 hours under an argon protection condition to remove the binder adhering to the surface of the negative active material, so as to obtain a negative active material. Test the obtained negative active material layer and the negative active material in the following way:

1. Testing a ratio of the uncoated area to the coating layer area in the negative active material

Test the degree of surface defects of the negative active material by using a laser microscopic confocal Raman spectrometer, and use an $I_D/I_G$ ratio of the peak intensity $I_D$ at 1350 cm$^{-1}$ to the peak intensity $I_G$ at 1580 cm$^{-1}$ of the specimen to represent the degree of surface defects of the specimen.
Test a plurality of positions for each specimen. Define the characteristic of the material by using the degree of surface defects in different regions. For example, define that the measured $I_D/I_G$ ratio value falling within the range of 0.01 to 0.4 represents the surface characteristics of graphite, denoted as a, and the measured $I_D/I_G$ ratio value falling within the range of 0.7 to 1.4 represents the surface characteristics of hard carbon, denoted as b.
The spatial resolution of the Raman test is s $\mu$m$^2$. According to the law of large numbers, in a case of sufficient test data, the value of a$\times$s may be approximately equivalent to an area of the uncoated graphite in the negative active material, that is, the area of a first region $A_1$ $\mu$m$^2$; and the value of b$\times$s may be approximately equivalent to the area of the hard carbon coating layer in the negative active material, that is, the area of a second region $A_2$ $\mu$m$^2$. Therefore, the ratio of the uncoated area to the area of the coating layer is $A_1/A_2$ = a/b.
The $A_1/A_2$ ratio of the uncoated area to the area of the coating layer of the negative active material is determined by the following method: taking 10 identical specimens of the negative active material, testing 100 different points on each specimen, counting based on the obtained $I_D/I_G$ ratio value to obtain the values of a and b, and calculating the ratio of the uncoated area to the area of the coating layer of the negative active material as $A_1/A_2$ = a/b.

2. Measuring the average thickness of the coating layer

Embed and cure the negative active material with epoxy resin, and then cut the negative active material into slices through ultramicrotomy to prepare specimens that include complete particles. Select sections of the particle specimens for observation by using high-magnification transmission electron microscopy, and observe the long-range ordered regions, that is, the graphite. Observe the amorphous coated region (in which the sheets are disordered, without any long-range ordered sheets) on the graphite surface, that is, the hard carbon region. Measure the thickness for several times, and average out the measured values to obtain an average thickness of the coating layer.

3. Testing the characteristic peak of the negative active material with an X-ray diffractometer (XRD)

Test the negative active material with an X-ray diffractometer (XRD, model: Bruker D8 ADVANCE) under the following conditions: the target material is Cu K$\alpha$, the voltage/current is 40 KV/40 mA, the scanning angle range is 5° to 80°, the scanning step length is 0.00836°, and the time spent on each step length is 0.3 s.

4. Measuring the particle size of the negative active material

Measure the particle size of powder of the negative active material by using a Malvern particle size analyzer according to the following method: Dispersing the negative active material in an ethanol dispersant, sonicating the material for 30 minutes to make a specimen, adding the specimen into the Malvern particle size analyzer, and measuring $Dv_{50}$ of the negative active material.

5. Measuring the specific surface area of particles of the negative active material

Measure the specific surface area of the negative active material by means of nitrogen adsorption/desorption by using a specific surface area analyzer (Tristar II 3020M) according to the following method: Drying a specimen of the negative active material in a vacuum oven, and then putting the specimen into a specimen tube and measuring the specific surface area in the analyzer.

6. Testing the gram capacity and first-cycle Coulombic efficiency of the negative active material

The first-cycle reversible gram capacity of the negative active material cycled at 0 V to 2.0 V may be determined by the following test method:
Cutting a single-side-coated negative electrode plate into a size of a specified area, using the cut-out electrode plate as a working electrode, using a lithium sheet (or sodium sheet, or the like) as a counter electrode, using the porous polyethylene film as a separator, injecting an electrolytic solution, and assembling the parts to form a button battery. The specific constituents of the electrolytic solution are not particularly limited. For example, the electrolytic solution may be a $LiPF_6$ solution with a concentration of 1 mol/L, and the solvent may be made of ethylene carbonate (EC) and diethyl carbonate (DEC) mixed at a mass ratio of 1:1.
Discharging the button battery at three low currents in three different stages until the voltage reaches 0 V, where the three low currents are 0.05 C, 50 $\mu$A, and 20 $\mu$A respectively, and recording a first-cycle discharge capacity of the button battery; and then charging the battery at a constant current of 0.1 C until a voltage of 2.0 V, and recording the first-cycle charge capacity of the button battery.

$$\text{First-cycle Coulombic efficiency} = \text{first-cycle charge capacity/first-cycle}$$

$$\text{discharge capacity} \times 100\%;$$

and

First-cycle reversible gram capacity of the negative active material cycled at 0 V to 2.0 V = first-cycle charge capacity of the button battery/mass of the negative active material.

II. Testing relevant parameters of the negative electrode plate

7. Testing the porosity of the negative active material layer

Cut out complete discs from the negative active material layer, and use the discs as specimens. Test 30 specimens for each embodiment or comparative embodiment, each specimen being approximately 0.35 $cm^3$ in volume. Test the porosity of the negative active material layer based on the standard GB/T24586-2009 *Iron ores-Determination of Apparent Density, True Density and Porosity.*

8. Testing the compacted density of the negative active material layer

Disassemble a fully discharged lithium-ion battery to take out a negative electrode plate. Rinse and dry the negative electrode plate, and weigh a section of the negative electrode plate by using an electronic balance (both sides of the negative current collector are coated with the negative active material layer), where the area of the section is denoted as S and the mass of the section is denoted as $P_1$. Measure a thickness $T_1$ of the negative electrode plate by using a high-precision micrometer. Wash off the negative active material layer by using a solvent, dry the negative current collector, measure the mass of the negative current collector, denoted as $P_2$, and measure the thickness of the negative current collector by using a high-precision micrometer, denoted as $T_2$. Calculate the mass $W_0$ and the thickness $T_0$ of the negative active material layer located on one side of the negative current collector, and the compacted density of the negative active material layer as:

$$P_0 = (P_1 - P_2)/2;$$

$$T_0 = (T_1 - T_2)/2;$$

and

$$\text{Compacted density} = P_0/(T_0 \times S).$$

III. Testing the performance parameters of the lithium-ion battery

9. Testing the energy density of the lithium-ion battery

Test the lithium-ion batteries in groups, each group containing 5 batteries.

First, charge and discharge the batteries for a first cycle in a 25 °C environment, carry out constant-current and constant-voltage charging at a current of 0.5 C separately until the voltage reaches an upper-limit voltage of 4.48 V, and then discharge the batteries at a constant current of 0.2 C until a cut-off voltage of 3 V. Determine a capacity and a discharge platform voltage of the lithium-ion battery based on the test results. Calculate the volumetric energy density of a lithium-ion battery as: volumetric energy density = capacity of the lithium-ion battery × discharge platform voltage/volume of the lithium-ion battery. Calculate a ratio of the volumetric energy density in each embodiment and comparative embodiment to the volumetric energy density in Comparative Embodiment 1.

10. Testing the charge rate performance of the lithium-ion battery

Test the lithium-ion batteries in groups, each group containing 5 batteries.

Charge and discharge the battery cyclically according to the following steps, record the (average) capacity in a constant-current (CC) charging stage and a constant-voltage (CV) charging stage separately, and calculate a percentage of the CC-stage capacity in a total capacity of the CC stage and the CV stage. The specific steps are as follows:

First, leave the battery to stand in a 25° environment for 1 hour.

Charge the battery at a constant-current (CC) charge rate of 1 C until the voltage reaches 4.48 V, and then charge the battery at a constant voltage (CV) until the charge current is lower than 0.05 C, and leave the battery to stand for 5 minutes. Subsequently, discharge the battery at a current of 0.2 C until a voltage of 3 V, and leave the battery to stand for 5 minutes. Ensure the integrity of subsequent charge-and-discharge processes.

Subsequently, charge the battery at different rates such as 0.2 C, 0.5 C, 1 C, 2 C, and 3 C sequentially according to the foregoing CC+CV charging mode until the capacity is full. Leave the battery to stand for 5 minutes, and fully discharge the battery at a 0.2 C rate. Cycle the battery at each rate once. Calculate the percentage of the CC-stage capacity in the total capacity of the CC stage and the CV stage of the battery cycled at different charge rates.

Charge the battery at a rate of 3 C according to the foregoing CC+CV charging mode until the capacity is full. Calculate the percentage as:

$$\text{CC-stage capacity percentage (3 C)} = [\text{charge capacity of the CC stage/total charge capacity of the CC stage and the CV stage}] \times 100\%.$$

11. Testing the low-temperature performance of the lithium-ion battery

Test the lithium-ion batteries in groups, each group containing 5 batteries.

First, charge and discharge the batteries for a first cycle in a 25 °C environment. Carry out constant-current and constant-voltage charging at a current of 0.5 C separately until the voltage reaches an upper-limit voltage of 4.48 V, and then discharge the batteries at a constant current of 0.2 C until a cut-off voltage of 3 V. Determine an average capacity A of the lithium-ion batteries. Subsequently, reduce the ambient temperature to -20 °C, and leave the batteries to stand for 1 hour. Determine an average capacity B of the lithium-ion batteries in a -20 °C environment according to the foregoing steps. Calculate a capacity retention rate as: capacity retention rate of the lithium-ion batteries cycled at -20 °C = B/A × 100%.

12. Testing the cycle performance of the lithium-ion battery

Test the lithium-ion batteries in groups, each group containing 5 batteries.

Charge and discharge the lithium-ion battery repeatedly according to the following steps, and calculate the discharge capacity retention rate and the thickness expansion rate of the lithium-ion battery:

First, charge and discharge the lithium-ion battery for a first cycle in a 25 °C environment. Charge the battery at a constant current of 1 C until the voltage reaches an upper-limit voltage of 4.48 V, and then charge the battery at a constant voltage. Subsequently, discharge the battery at a constant current of 1 C until the voltage finally reaches 3 V. Record the first-cycle discharge capacity and the thickness of a fully charged battery cell. Subsequently, repeat the charging and discharging steps for 400 cycles, and record the 400th-cycle discharge capacity and the thickness of the fully charged battery cell.

$$\text{Cycle capacity retention rate} = (400^{\text{th}}\text{-cycle discharge capacity/first-cycle discharge capacity}) \times 100\%.$$

$$\text{Thickness expansion rate of the battery cell cycled} = (\text{thickness of the fully charged battery cell at the end of the } 400^{\text{th}} \text{ cycle/thickness of the fully charged battery cell at the end of the first cycle}) \times 100\%.$$

The test results are described below.

Table 1 and Table 2 show relevant parameters of each embodiment and comparative embodiment:

Table 1

| Serial number | Composite material | | | | | | | Negative active material layer | |
|---|---|---|---|---|---|---|---|---|---|
| | Mass percent of graphite (%) | Mass percent of pitch (%) | $Dv_{50}$ of graphite (μm) | $D_{v50}$ of pitch (μm) | Ratio of uncoated area to coating layer area $A_1/A_2$ | Average thickness of coating layer H (nm) | Specific surface area (m²/g) | Compacted density (g/cm³) | Porosity (%) |
| Embodiment 1 | 99 | 1 | 11 | 2 | 8.01 | 9 | 1.3 | 1.64 | 20 |
| Embodiment 2 | 97 | 3 | 11 | 2 | 3.76 | 13 | 1.5 | 1.63 | 20 |
| Embodiment 3 | 95 | 5 | 11 | 2 | 1.78 | 19 | 1.8 | 1.62 | 21 |
| Embodiment 4 | 93 | 7 | 11 | 2 | 0.47 | 22 | 2.3 | 1.60 | 21 |
| Embodiment 5 | 91 | 9 | 11 | 2 | 0.14 | 31 | 2.6 | 1.59 | 21 |
| Embodiment 6 | 95 | 5 | 11 | 0.5 | 0.00 | 15 | 2.5 | 1.62 | 21 |
| Embodiment 7 | 95 | 5 | 11 | 1 | 0.04 | 16 | 2.4 | 1.62 | 21 |
| Embodiment 8 | 95 | 5 | 11 | 3 | 0.33 | 21 | 2.2 | 1.62 | 21 |
| Embodiment 9 | 95 | 5 | 11 | 4 | 0.54 | 24 | 2.1 | 1.62 | 21 |
| Embodiment 10 | 95 | 5 | 11 | 5 | 1.17 | 36 | 1.9 | 1.62 | 21 |
| Mass percent of graphite (%) | Mass percent of pitch (%) | $Dv_{50}$ of graphite (μm) | $D_{v50}$ of pitch (μm) | Ratio of uncoated area to coating layer area $A_1/A_2$ | Average thickness of coating layer H (nm) | Specific surface area (m²/g) | Compacted density (g/cm³) | Porosity (%) | |
| Embodiment 11 | 95 | 5 | 8 | 2 | 0.18 | 17 | 2.3 | 1.62 | 21 |
| Embodiment 12 | 95 | 5 | 9 | 2 | 0.54 | 18 | 2.1 | 1.62 | 21 |
| Embodiment 13 | 95 | 5 | 10 | 2 | 1.00 | 24 | 2.0 | 1.62 | 21 |
| Embodiment 14 | 95 | 5 | 12 | 2 | 2.13 | 35 | 1.8 | 1.62 | 21 |
| Embodiment 15 | 95 | 5 | 13 | 2 | 2.85 | 43 | 1.7 | 1.62 | 21 |

| Mass percent of graphite (%) | Mass percent of pitch (%) | $Dv_{50}$ of graphite (μm) | $D_{v50}$ of pitch (μm) | Ratio of uncoated area to coating layer area $A_1/A_2$ | Average thickness of coating layer H (nm) | Specific surface area (m²/g) | Compacted density (g/cm³) | Porosity (%) | |
|---|---|---|---|---|---|---|---|---|---|
| Embodiment 16 | 95 | 5 | 14 | 2 | 3.76 | 50 | 1.7 | 1.62 | 21 |
| Embodiment 17 | 90 | 10 | 11 | 2 | 0.11 | 36 | 2.7 | 1.59 | 21 |
| Embodiment 18 | 85 | 15 | 11 | 2 | 0.00 | 50 | 3.1 | 1.55 | 22 |
| Embodiment 19 | 80 | 20 | 11 | 2 | 0.00 | 54 | 3.5 | 1.52 | 22 |
| Embodiment 20 | 75 | 25 | 11 | 2 | 0.05 | 75 | 3.8 | 1.49 | 23 |
| Embodiment 21 | 70 | 30 | 11 | 2 | 0.33 | 171 | 3.9 | 1.46 | 23 |
| Embodiment 22 | 65 | 35 | 11 | 2 | 0.28 | 206 | 4.3 | 1.42 | 24 |
| Mass percent of graphite (%) | Mass percent of pitch (%) | $Dv_{50}$ of graphite (μm) | $D_{v50}$ of pitch (μm) | Ratio of uncoated area to coating layer area $A_1/A_2$ | Average thickness of coating layer H (nm) | Specific surface area (m²/g) | Compacted density (g/cm³) | Porosity (%) | |
| Embodiment 23 | 60 | 40 | 11 | 2 | 0.25 | 240 | 4.6 | 1.39 | 24 |
| Embodiment 24 | 55 | 45 | 11 | 2 | 0.19 | 289 | 5.0 | 1.36 | 25 |
| Embodiment 25 | 50 | 50 | 11 | 2 | 0.15 | 489 | 5.3 | 1.33 | 25 |
| Comparative Embodiment 1 | 100 | 0 | 11 | \ | \ | \ | 1.1 | 1.65 | 20 |
| Comparative Embodiment 2 | 0 | 100 | \ | 11 | \ | \ | 7.8 | 1.00 | 30 |

(continued)

| Mass percent of graphite (%) | Mass percent of pitch (%) | $D_{v50}$ of graphite (μm) | $D_{v50}$ of pitch (μm) | Ratio of uncoated area to coating layer area $A_1/A_2$ | Average thickness of coating layer H (nm) | Specific surface area (m²/g) | Compacted density (g/cm³) | Porosity (%) | |
|---|---|---|---|---|---|---|---|---|---|
| Comparative Embodiment 3 | 40 | 60 | 11 | 2 | 0.10 | 559 | 6.0 | 1.26 | 26 |
| Comparative Embodiment 4 | 33 | 67 | 11 | 2 | 0.05 | 671 | 6.6 | 1.21 | 27 |

Table 2

| Serial number | Gram capacity (mAh/g) | First-cycle Coulombic efficiency (%) | Percentage of energy density of pouch-type battery relative to Comparative Embodiment 1 (%) | CC-stage capacity percentage (3C) (%) | Capacity retention rate at -20 °C (%) | 400th-cycle thickness expansion rate (%) | 400th-cycle capacity retention rate (%) |
|---|---|---|---|---|---|---|---|
| Embodiment 1 | 356 | 93.7 | 100 | 73.2 | 80.2 | 8.8 | 88.2 |
| Embodiment 2 | 360 | 93.1 | 100 | 73.4 | 80.5 | 8.5 | 88.4 |
| Embodiment 3 | 364 | 92.5 | 99 | 73.7 | 80.8 | 8.1 | 88.7 |
| Embodiment 4 | 370 | 92.0 | 100 | 74.1 | 81.3 | 7.6 | 89.2 |
| Embodiment 5 | 375 | 91.5 | 99 | 74.4 | 81.7 | 7.1 | 89.5 |
| Embodiment 6 | 371 | 92.6 | 101 | 74.3 | 81.5 | 7.5 | 89.5 |
| Embodiment 7 | 370 | 92.6 | 101 | 74.3 | 81.4 | 7.5 | 89.4 |
| Embodiment 8 | 368 | 92.6 | 100 | 74.1 | 81.2 | 7.7 | 89.2 |
| Embodiment 9 | 367 | 92.6 | 100 | 74.0 | 81.1 | 7.8 | 89.0 |
| Embodiment 10 | 365 | 92.5 | 100 | 73.8 | 80.9 | 8.0 | 88.8 |
| Embodiment 11 | 369 | 92.6 | 101 | 74.2 | 81.3 | 7.6 | 89.3 |
| Embodiment 12 | 367 | 92.6 | 100 | 74.0 | 81.1 | 7.8 | 89.0 |
| Embodiment 13 | 366 | 92.5 | 100 | 73.8 | 81.0 | 8.0 | 88.9 |
| Embodiment 14 | 364 | 92.5 | 99 | 73.6 | 80.8 | 8.1 | 88.6 |
| Embodiment 15 | 363 | 92.5 | 99 | 73.6 | 80.7 | 8.2 | 88.6 |
| Embodiment 16 | 363 | 92.5 | 99 | 73.5 | 80.7 | 8.2 | 88.5 |
| Embodiment 17 | 376 | 91.2 | 99 | 74.5 | 81.8 | 7.0 | 89.6 |
| Embodiment 18 | 384 | 89.9 | 98 | 74.9 | 82.4 | 6.4 | 89.9 |
| Embodiment 19 | 391 | 88.6 | 96 | 75.2 | 82.8 | 5.8 | 90.2 |

(continued)

| Serial number | Gram capacity (mAh/g) | First-cycle Coulombic efficiency (%) | Percentage of energy density of pouch-type battery relative to Comparative Embodiment 1 (%) | CC-stage capacity percentage (3C) (%) | Capacity retention rate at -20 °C (%) | 400th-cycle thickness expansion rate (%) | 400th-cycle capacity retention rate (%) |
|---|---|---|---|---|---|---|---|
| Embodiment 20 | 397 | 87.4 | 94 | 75.5 | 83.2 | 5.3 | 90.3 |
| Embodiment 21 | 402 | 86.3 | 93 | 75.6 | 83.5 | 5.0 | 90.3 |
| Embodiment 22 | 409 | 85.3 | 93 | 75.9 | 83.9 | 4.4 | 90.6 |
| Embodiment 23 | 416 | 84.3 | 92 | 76.2 | 84.4 | 3.8 | 90.8 |
| Embodiment 24 | 423 | 83.4 | 92 | 76.5 | 84.9 | 3.2 | 91.1 |
| Embodiment 25 | 430 | 82.5 | 91 | 76.9 | 85.4 | 2.6 | 91.3 |
| Comparative Embodiment 1 | 354 | 94.0 | 100 | 73.0 | 80.0 | 9.0 | 88.0 |
| Comparative Embodiment 2 | 488 | 76.5 | 90 | 79.0 | 89.0 | 2.0 | 92.0 |
| Comparative Embodiment 3 | 444 | 80.9 | 91 | 77.5 | 86.3 | 2.4 | 91.8 |
| Comparative Embodiment 4 | 453 | 79.8 | 90 | 78.0 | 87.0 | 1.6 | 92.2 |

As can be seen from Table 1 and Table 2, in Comparative Embodiment 1, graphite is used as a negative active material, and, in Comparative Embodiment 2, pitch-based hard carbon is used as a negative active material. In Embodiments 1 to 25 and Comparative Embodiments 3 and 4, the composite material formed of graphite coated with a pitch-based hard carbon layer is used as a negative active material.

As can be seen from Embodiments 1 to 25 and Comparative Embodiments 3 and 4, with the increase of the mass percent of the pitch serving as a coating constituent, the $A_1/A_2$ ratio of the uncoated area to the area of the coating layer decreases, and the average thickness H of the coating layer increases. However, when the mass percent of the pitch constituent increases to a specified value, the particles stick to each other during melting, and the stuck particles need to be pulverized and sieved. The pulverization process leads to exposure of the coating interface. In the embodiment group in which the mass percent of the coating pitch constituent is relatively high, both the specific surface area and the gram capacity of the composite material are increased, but the first-cycle Coulombic efficiency decreases. That is because the hard carbon material includes relatively many defects and pores. That is also a reason for the relatively low compacted density and relatively high porosity of the negative active material layer in the corresponding embodiments. When the mass percent of the coating constituent pitch and the particle sizes of graphite and pitch are appropriate, the lithium-ion batteries prepared from the composite material compounded of the graphite and pitch can achieve a higher energy density and improve the fast charge ability, low-temperature capacity retention rate, and long-cycle performance.

Although illustrative embodiments have been demonstrated and described above, a person skilled in the art understands that the foregoing embodiments are never to be construed as a limitation on this application, and changes, replacements, and modifications may be made to the embodiments without departing from the principles, and scope of this application.

**Claims**

1. A composite material, comprising:
   a graphite particle, wherein a surface of the graphite particle is provided with a first region and a second region, the first region is made of graphite, the second region comprises a hard carbon layer; a surface area of the first region is denoted as $A_1$ $\mu m^2$, and a surface area of the second region is denoted as $A_2$ $\mu m^2$, $0 \leq A_1/A_2 \leq 9$; a thickness of the hard carbon layer is H nm, $5 \leq H \leq 500$.

2. The composite material according to claim 1, wherein
   $0 < A_1/A_2 \leq 4$; and/or $5 \leq H \leq 200$.

3. The composite material according to claim 1 or 2, wherein

   an X-ray diffraction pattern of the composite material comprises a hard carbon characteristic diffraction peak in a range of 18° to 30°, and a half-width of the hard carbon characteristic diffraction peak is 4° to 12°; and the X-ray diffraction pattern of the composite material further comprises a graphite characteristic diffraction peak in a range of 26° to 27°.

4. The composite material according to any one of claims 1 to 3, wherein
   a Raman spectrum of the composite material comprises a characteristic peak D and a characteristic peak E, a peak intensity of the characteristic peak D is denoted as $I_D$, a peak intensity of the characteristic peak E is denoted as $I_G$, and an $I_D/I_G$ ratio satisfies $0.05 \leq I_D/I_G \leq 1.4$.

5. The composite material according to any one of claims 1 to 4, wherein
   a specific surface area BET of the composite material is denoted as S $m^2/g$, $0.5 \leq S \leq 8$.

6. A method for preparing the composite material of any one of claims 1 to 5, the method comprising:

   mixing a precursor pitch material and a graphite to form a mixed system;
   heat-treating the mixed system at a first temperature, so that the precursor pitch material is melted and coats an outer surface of the graphite to form a composite precursor;
   heat-treating the composite precursor at a second temperature, so that the composite precursor is oxidatively cross-linked to form a cross-linked precursor; and
   carbonizing the cross-linked precursor to obtain the composite material.

7. The method according to claim 6, wherein

   a volume median particle size $Dv_{50}$ of the precursor pitch material is 0.5 $\mu m$ to 5.0 $\mu m$; and/or
   a volume median particle size $Dv_{50}$ of the graphite is 8 $\mu m$ to 14 $\mu m$.

8. The method according to claim 6 or 7, wherein

   a mass percent of the precursor pitch material relative to the mixed system is denoted as $M_1$ wt%;
   a mass percent of the graphite relative to the mixed system is denoted as $M_2$ wt%; and

   $$0.01 \leq M_1/M_2 \leq 1.$$

9. The method according to any one of claims 6 to 8, wherein

   the precursor pitch material comprises one or more of petroleum asphalt, mesophase pitch, or modified pitch;
   the precursor pitch material satisfies one or more of the following conditions (1) to (3):

(1) a softening point of the precursor pitch material is 150 °C to 320 °C;

(2) a residual carbon content of the precursor pitch material is greater than or equal to 50%; or

(3) a mass percent of an insoluble quinoline substance in the precursor pitch material is less than or equal to 5 wt%.

**10.** A negative electrode plate, comprising a negative current collector and a negative active material layer disposed on at least one surface of the negative current collector, and the negative active material layer comprises the composite material according to any one of claims 1 to 5 or the composite material prepared by the method according to any one of claims 6 to 9.

**11.** The negative electrode plate according to claim 10, wherein

a compacted density of the negative active material layer ranges from 1.45 g/cm$^3$ to 1.7 g/cm$^3$; and/or

a porosity of the negative active material layer ranges from 15% to 25%.

**12.** An electrochemical device, comprising a negative electrode plate, wherein the negative electrode plate comprises the negative electrode plate according to claim 10 or 11.

**13.** An electronic device, comprising the electrochemical device according to claim 12.

Europäisches
Patentamt

European
Patent Office

Office européen
des brevets

# EUROPEAN SEARCH REPORT

Application Number

EP 23 19 9760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/040203 A1 (YOON SANG-YOUNG [US] ET AL) 14 February 2013 (2013-02-14) * abstract * * figure 3 * * claims 1,3-5,28 * * examples 1, 3-5 * | 1-6,8, 10-13 | INV. C01B32/05 H01M4/02 C01B32/21 |
| X | WO 2022/188818 A1 (BTR NEW MAT GROUP CO LTD [CN]) 15 September 2022 (2022-09-15) * abstract * * claims 1,9 * * example 1 * | 1-6,8, 10-13 | |
| X | KR 2021 0079864 A (RES INST IND SCIENCE & TECH [KR]) 30 June 2021 (2021-06-30) * abstract * * claims 1,2,4-6 * * paragraph [0070] * * table 1 * | 1-6,8, 10-13 | |
| X | CN 114 512 652 A (XINJIANG TIANMACRO SCIENCE AND TECH CO LTD) 17 May 2022 (2022-05-17) * abstract * * claim 1 * * examples 1-3 * | 1-13 | TECHNICAL FIELDS SEARCHED (IPC) C01B H01M |

The present search report has been drawn up for all claims

| Place of search | Date of completion of the search | Examiner |
|---|---|---|
| The Hague | 4 March 2024 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 9760

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | | Publication date | Patent family member(s) | | Publication date |
|---|---|---|---|---|---|
| US 2013040203 | A1 | 14-02-2013 | CN 202977600 U | | 05-06-2013 |
| | | | JP 2013515349 A | | 02-05-2013 |
| | | | US 2013040203 A1 | | 14-02-2013 |
| | | | WO 2011084817 A1 | | 14-07-2011 |
| WO 2022188818 | A1 | 15-09-2022 | CN 115084456 A | | 20-09-2022 |
| | | | WO 2022188818 A1 | | 15-09-2022 |
| KR 20210079864 | A | 30-06-2021 | KR 20210079864 A | | 30-06-2021 |
| | | | KR 20210144636 A | | 30-11-2021 |
| CN 114512652 | A | 17-05-2022 | NONE | | |

EPO FORM P0459

For more details about this annex : see Official Journal of the European Patent Office, No. 12/82